# EUROPEAN PATENT SPECIFICATION

(11) **EP 2 084 577 B1**
(45) Date of publication and mention of the grant of the patent: **19.12.2012**
(21) Application number: 06849861.7
(22) Date of filing: 31.10.2006
(51) Int. Cl.: G03G 9/12, C09D 11/02

(54) **HIGH SOLIDS LIQUID TONER CONCENTRATE AND METHOD OF ITS PRODUCTION**
HOCHFESTSTOFF-FLÜSSIGTONERKONZENTRAT UND HERSTELLUNGSVERFAHREN DAFÜR
CONCENTRAT DE TONER LIQUIDE À TENEUR ÉLEVÉE EN SOLIDES ET PROCÉDÉ DE FABRICATION DE CELUI-CI

(43) Date of publication of application: 05.08.2009
(73) Proprietor: Hewlett-Packard Development Company, L.P., Houston, TX 77070 (US)
(72) Inventor: FRYDMAN, Iian, 76101 Rehovot (IL); ASHKENAZI, Itzhak, 76101 Rehovot (IL); SCHEFFER, Dan, 76101 Rehovot (IL)
(74) Representative: Liesegang, Eva
(86) International application number: PCT/US2006/042394
(87) International publication number: WO 2008/054386

(56) References cited:
- US-A- 5 206 108
- US-A- 5 254 424
- US-A- 5 492 788

## Description

### FIELD OF THE INVENTION

The present invention relates to replenishable concentrates of liquid developers employed in liquid electro-photographic printing systems and a method for their production.

### BACKGROUND OF THE INVENTION

In many printing systems, it is common practice to develop a hardcopy of an image by using a photoconductive surface. The photoconductive surface is selectively charged with a latent electrostatic image having image and background areas. A liquid developer, stored in a developer reservoir, comprising charged toner particles in a carrier liquid is brought into contact with the selectively charged photoconductive surface. The charged toner particles adhere to the image areas of the latent image while the background areas remain clean. A hardcopy material (e.g. paper) is brought directly or indirectly into contact with the photoconductive surface in order to transfer the latent image. Variations of this method utilize different ways for forming the electrostatic latent image on a photoreceptor or on a dielectric material.

Typically the liquid developer (often referred to in the art as ink or toner) comprises a thermoplastic resin (polymer) as the basis for the toner particles (also referred to as ink particles), and a non-polar liquid as a carrier liquid in which the toner particles are dispersed. Generally, the toner particles contain a colorant such as a pigment. A charge adjuvant is often included to stabilize the magnitude and polarity of the charge on the toner particles. Liquid developers can also have soluble ionic materials in solution known as charge directors, which impart a charge on the toner particles.

Bringing the liquid developer to contact with the photoconductive surface depletes the overall amount of liquid developer in the developer reservoir. Generally, the reservoir is replenished from two different sources, the first containing carrier liquid and the second containing concentrated dispersion of toner particles in carrier liquid. The rate of replenishment of carrier liquid is controlled by monitoring the overall amount of liquid developer. The rate of replenishment of toner particles is controlled by monitoring the concentration of toner particles in the liquid developer, generally by optical sensing. Thus, the toner particle concentration in the developer reservoir remains relatively constant.

The amount of toner particles utilized for each photocopy or print varies in proportion to its print area. A large number of prints with small print areas will result in very little utilization of toner particles. Similarly, a large number of prints with high print areas will deplete the number of toner particles in the liquid developer resulting in addition of concentrated toner particles dispersion to the liquid developer reservoir.

In order to maintain the print quality and to eliminate degradation, the balance of toner particles and carrier liquid in the reservoir should be preserved.

In order to maintain this balance in the toner reservoir, the concentrated toner source should be high enough to replenish the toner particles using any printing mode, especially in cases in which high ink coverage is required. Therefore, it is desirable to employ an ink concentrate at high concentration as possible. It is also more economical overall, to utilize the ink concentrate at the highest replenishable concentration, for convenience of storing and transportation.

US patent numbers 4,794,651, 4,842,974, 5,047,307, 5,346,796, 5,407,771 and 5,554,476 (the disclosures of which are incorporated herein by reference) describe preparation and characterization of electrostatic liquid developers, with toner particles formed with a plurality of fiber extensions or tendrils and marked under the trade name ElectroInk®.. The polymer is substantially insoluble in and does not solvate the carrier liquid at room temperature.

After manufacture and cooling of the toner particles, the particles are present in a relatively dilute concentration of tentacular toner particles in carrier liquid. The obtained dispersion of tentacular toner particles in carrier liquid is then subjected to a process of mechanical concentration, in order to produce the replenishing concentrate used for maintaining the balance in the toner reservoir. The highest concentration of closely packed tentacular ink in conventional carrier liquid such as Isopar L achieved to date is in the range of 20-23 percent toner solids by weight in respect to the total weight of the concentrate. Further increase in toner concentration, above 30-35% NVS (=non volatile solids, also referred herein as *solids*), results in an irreversible agglomeration of particles and a considerably increase in particle size distribution if redispersion is attempted. Due to the tentacularity of the toner particles, the ability to concentrate the particles and then redisperse them is limited. Firstly, they are hard to concentrate due to the high void volume that is associated with the tentacles. As compression proceeds, mechanical interaction via the tentacles apparently make it difficult to disperse the particles.

The carrier liquid should be dielectric and inert. It is chosen to support and facilitate rapid and compact electrical development of the toner particles onto the photoconductor. In addition, it is desirable that the carrier liquid should not adversely affect the durability of the ink on the substrate caused by a low rate of evaporation from the printed image.

US patent number 5,306,590, the disclosure of which is hereby incorporated by reference, discloses a high solid liquid developer concentrate comprising of toner particles containing a carboxyl terminated polyester resin, a pigment and a liquid toner dispersant.

### SUMMARY OF THE INVENTION

The objects of the present invention are solved as claimed in the claims.

The present invention provides an electro-graphic printing ink concentrate comprising tentacular ink particles at solid concentration of at least 30% nvs, in a liquid carrier, wherein the ink concentrate further comprises a concentrating liquid having a viscosity of from 3 to 50 mPa·s (3 to 50 cSt) at 25°C, and wherein the ink particles are tentacular in that they are formed with cores of polymer having extensions formed of substantially the same materials as the core.

The present invention further provides a method of producing a re-dispersible tentacular ink concentrate, the method comprising:
a) grinding ink particles precursors in a carrier liquid to obtain a dispersion of ink particles in the carrier liquid;
b) replacing at least a portion of the carrier liquid by a suitable concentrating liquid having a viscosity of from 3 to 50 mPa·s (3 to 50 cSt) at 25°C to obtain a replaced dispersion, and
c) concentrating said replaced dispersion to at least 30% solids,
wherein the ink particles are tentacular in that they are formed with cores of polymer having extensions formed of substantially the same materials as the core.

An aspect of the invention relates to a concentrated liquid developer, also referred to herein as a concentrate, the concentrate comprising tentacular toner particles dispersed in a carrier liquid. The solids concentration in the concentrate is at least 30% optionally at least 35%, optionally at least 50% solids (weight of solids per weight of concentrate) and up to 65% or more.. The concentrate is easily dispersible in a carrier liquid to provide liquid toner employable in an ink reservoir of an electro-photographic printing system (also referred to herein as *press*) for printing. It was found that the incorporation of certain suitable concentrating liquids into the toner as manufactured enables concentrating the dispersion to obtain concentrates of high solid concentration, that are easily re-dispersible. Not all concentrating liquids are appropriate as carrier liquids in workable liquid developer. Some of them may have adverse effect on the ink durability on substrate, for instance, due to the plasticization of the image.

In one embodiment of the invention, concentrating liquids are used as or in the liquid vehicle in the grinding stage of the toner and then the ground toner is concentrated to at least 35% solids. Optionally, when the concentrating liquid is not suitable as a carrier liquid, it is preferably present in the ink concentrate and in the final toner only in minimal amounts.

In another embodiment, grinding takes place using a conventional carrier liquid, such as Isopar L as the vehicle for the toner particles. After grinding, the carrier liquid or portion of it is removed and replaced by a concentrating liquid suitable for allowing a dispersible high concentration. The dispersion is then concentrated to at least 30% solids. Preferably, the dispersion is allowed to equilibrate, optionally for about an hour, before it is concentrated after replacement of the liquid.

Empirical data show that replacement of 10%-100% (w/w) of the conventional carrier liquid with a concentrating liquid is suitable for achieving a re-dispersible concentrate with at least 30% solids.

Preferably, the highly concentrated mixture, having 30%, 35%, 50% or more toner particles may be easily dispersed in a carrier liquid to provide a liquid toner with small particles, for example, particles having average size of less than 10, 8 or 7 micrometers and a concentration of 0.5-5% toner particles by weight. The highly concentrated mixture may contain for example 40%, 50%, 65% or 85% solids. The highly concentrated mixtures may be supplied in cans or buckets that have more toner particle per unit weight, and require less frequent replacement than required with cans or buckets of less concentrated ink.

The preferred carrier liquid is characterized by a high enough flash point, preferably above the flash point that designate flammable liquids, and concomitantly be able to be evaporated rapidly enough to ensure good ink durability on the substrate. Commonly used carrier liquids are non polar, non toxic liquids having a high volume resistivity, in excess of 10⁹ ohm/cm, a low dielectric constant, below 3.0 and odorless. An example of liquids acting as carrier liquids are aliphatic isomerized hydrocarbons, produced by Exxon Corporation and sold under the trademark of Isopar G, Isopar H, Isopar L and Isopar M. Isopar G has a flash point of 40°C, determined by the tag closed cap method. A desirable carrier liquid is Isopar L, which has a flash point of 61 °C (ASTM D-56); Isopar M has a flash point of 80°C (ASTM D-56). It is used as a plasticizing solvent for the polymer rather than as a carrier liquid.

The polymers used for the toner particles are preferably thermoplastic, and the preferred polymers are known as Nucrels™, manufactured by E.I. du Pont. Polymers of the Nucrel family include ethylene acrylic (or methacrylic) acid copolymers, combining carboxylic acid functionality, high molecular weight and thermal stability. Other polymers suitable for use in tentacular toner particles are the ethylene-ethylacrylate of the Bakelite™ series, made by Union Carbide. Another class of useful polymers are methacrylate resins such as poly butyl methacrylate of the Elvacite™ series, manufactured by E.I. du Pont.

The polymers are normally pigmented to render the latent image visible. The pigment may be present in the amounts of 10-35% by weight in respect of the weight of the polymer.

Examples of pigments are Mogul L (Cabot), Monastral Blue G (C.I No.74160), Toluidine Red Y (C.I. Pigment Red 3), Quindo Magenta (Pigment Red 122), Dalamar Yellow (Pigment Yellow 74, C.I. No. 11741), Monastrel Green B (C.I. Pigment Green 7).

According to the invention, the concentrating liquids used during grinding, have a viscosity of from about 3 to 50 mPa·s (3 to 50 cSt) at 25°C. Liquids with much lower viscosity might hinder redispersibility of the concentrate, while liquids of much higher viscosity might adversely affect the grinding. Suitable concentrating liquids added post grinding by replacement of all or portion of the grinding liquid preferably have a viscosity of at least 3 mPa·s (3 cSt).

In an exemplary embodiment of the invention, the suitable concentrating liquids have vapor pressure of below 133.322 Pa (1 mmHg), preferably below 20 Pa (0.15 mmHg).

Examples of suitable concentrating liquids are Marcol 82 (Esso), viscosity of 13.9 mPa·s (13.9 cSt) at 25°C and vapor pressure of <13.3 Pa (0.1 mmHg). Exxsol D110 (hydrocarbon fluid by Exxon) viscosity of 3.5 mPa·s (3.5 cSt) at 25°C and vapor pressure of <13.3 Pa (0.01 mmHg). Soy Gold 2000 (Ag environmental products), viscosity of 4.72 mPa·s (4.72 cSt) at 25°C and vapor pressure of 117 Pa (0.88 mmHg). Jojova oil (Exxon), viscosity of 27.8 mPa·s (27.8 cSt) at 25°C. Safflower oil (Exxon), viscosity of 37.7 mPa·s (37.7 cSt) at 25°C. Soya oil, (Exxon) viscosity of 40.5 mPa·s (40.5 cSt) at 25°C. Sunflower oil (Exxon), viscosity of 42.5 mPa·s (42.5 cSt) at 25°C. Canola oil (Exxon), viscosity of 44.5 mPa·s (44.5 cSt) at 25°C. Radio 7060, methyl oleate (Fina chemicals), viscosity of 4.7 mPa·s (4.7 cSt) at 25°C. It is noted that Soy Gold™ 2000 was found suitable as a suitable carrier although its vapor pressure is above the preferred limit.

Thus, an aspect of some embodiments of the invention relates to an electro-graphic printing ink concentrate comprising tentacular ink particles at solid concentration of at least 30%, NVS, 35%, at least 40%, at least 50%, or at least 60% in a liquid carrier.

Preferably, the liquid carrier is selected from hydro carbonic oils, silicone oils, mineral oils and mixtures thereof.

In an exemplary embodiment of the invention, the printing ink concentrate includes a concentrating liquid, the incorporation of which into a toner dispersion enables concentrating the dispersion to obtain concentrates of solid concentrations higher than 30%, 35%, 40%, 50%, or 60% NVS, which are easily re-dispersible.

Optionally, the vapor pressure of the concentrating liquid at room temperature is below 20 Pa (0.15, mmHg), optionally below 13.3 Pa (0.1 mm Hg).

Optionally, a suitable concentrating liquid is a mineral oil, hydrocarbon fluid, or methyl-ester solvent.

Preferably, the concentrating liquid has high lubricity towards the tentacular particles.

The present invention describes a method of producing a re-dispersible tentacular ink concentrate, the method comprising:
(a) grinding toner particle precursors in a liquid to obtain a dispersion of tentacular ink particles in said liquid; and
(b)concentrating said dispersion to at least 30% nvs.

In an exemplary embodiment described herein, the liquid used for grinding comprises at least 10% of a concentrating liquid having a viscosity of from 3 to 50 mPa·s (3 to 50 cSt).

There is thus provided, in accordance with an exemplary embodiment of the invention an electro-graphic printing ink concentrate comprising tentacular ink particles at solid concentration of at least 30% nvs, at least 40% nvs, at least 50% nvs, or at least 60% nvs, in a liquid carrier.

Optionally, the liquid carrier is selected from hydro carbonic oils, silicone oils, mineral oils and mixtures thereof.

The ink concentrate comprises a concentrating liquid having a viscosity of from 3 to 50 mPa·s at 25°C the incorporation of which into a toner dispersion enables concentrating the dispersion to obtain concentrates having solid concentrations higher than 30% NVS, which are easily re-dispersible.

Optionally, the vapor pressure of the concentrating liquid at room temperature is below 20 Pa (0.15, mmHg), optionally below 13.3 Pa (0.1 mm Hg).

Optionally, the concentrating liquid comprises a mineral oil, hydrocarbon fluid, or methyl-ester solvent.

In an embodiment of the invention, the concentrating liquid imparts a high lubricity towards the tentacular particles.

The invention describes a method of producing a re-dispersible tentacular ink concentrate, the method comprising:
(a) grinding toner particle precursors in a liquid to obtain a dispersion of tentacular ink particles in said liquid; and
(b)concentrating said dispersion to at least 30% NVS.

In an embodiment described herein, the liquid used for grinding comprises at least 10% by weight of a concentrating liquid having a viscosity of from 3 to 50 mPa·s (3 to 50 cSt).

There is further provided, in accordance with the invention, a method of producing a re-dispersible tentacular ink concentrate, the method comprising:
a) grinding ink particles precursors in a carrier liquid to obtain a dispersion of ink particles in the carrier liquid;
b) replacing at least a portion of the carrier liquid by a suitable concentrating liquid having a viscosity of from 3 to 50 mPa·s (3 to 50 cSt) at 25°C to obtain a replaced dispersion, and
c) concentrating said replaced dispersion to at least 30%, optionally at least 40%, optionally at least 50%, optionally at least 60%, solids.

In an embodiment of the invention, concentrating liquid is present in at least 10% by weight of the total liquid before concentration.

In an embodiment of the invention, the vapor pressure of the concentrating liquid is below 20 Pa (0.15, mmHg), optionally below 13.3 Pa (0.1 mm Hg).

Optionally, the concentrating liquid comprises a mineral oil, hydrocarbon fluid, and/or methyl ester solvent.

In an embodiment of the invention, the concentrating liquid has high lubricity towards the tentacular particles.

There is further provided, in accordance with an exemplary embodiment of the invention, a method of making electro-photographic printing ink, wherein the method comprises diluting the printing ink concentrate of any one of claims 1-7 or produced according to the method of any one of claims 10-12 with a carrier liquid to produce a liquid ink having a toner particle concentration of between 1 and 5 % by weight.

In an embodiment of the invention, the percentage of concentrating liquid is at least 25%, optionally at least 50%.

In according with the invention, the toner particles are tentacular.

### BRIEF DESCRIPTION OF FIGURES

In order to better understand the invention and to see how it is carried out in practice, some embodiments will be described herein below by way of non limiting examples only, with reference to the figures, wherein:
Fig. 1 is a flow chart of a method described herein; and
Fig 2 is a flow chart of a method according to an embodiment of the invention.

### DETAILED DESCRIPTION OF EXEMPLARY EMBODIMENTS

In a preferred embodiment of the invention, toner particles are made of toner particle precursors, and these are made of a polymeric material solvated by a carrier liquid, such as Isopar L, at elevated temperature, and left to cool to room temperature as described in example 1A. The toner particle precursors are ground together with pigments and additional liquid carrier, and then concentrated.

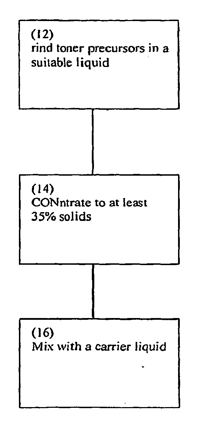

Fig. 1 is a flow chart of a method 10, described herein. Method 10 includes grinding toner particles precursors in a liquid comprising a concentrating liquid to obtain a first dispersion (12). The first dispersion is concentrated (14) to at least 35% solids to obtain a concentrate. This concentrate may serve in replenishing a toner reservoir in a press. To obtain a workable liquid developer from this concentrate, the concentrate is mixed (16) with a carrier liquid, for example Isopar L.

Optionally, the obtained liquid developer is charged as known in the art.

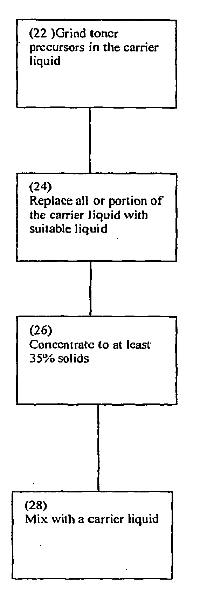

Fig. 2 is a flowchart of a method (20) according to an embodiment of the invention. Method 20 includes grinding of a toner precursor in a carrier liquid such as Isopar L to obtain a first dispersion (22); and removing all or portion of the carrier liquid, and replacing it with a concentrating liquid (24) to obtain a second dispersion. The second dispersion is concentrated to at least 35% solids to obtain a concentrate (26); which may serve in a toner reservoir in a press. To obtain workable liquid developer, the concentrate is mixed with a carrier liquid (28), preferably Isopar L,. Optionally the obtained liquid developer is charged as known in the art.

An exemplary protocol for carrying out the concentration process 14 (Fig. 1) or 26 (Fig. 2) in accordance is as follows:
30g of a dispersion of toner particles in a liquid that comprises a concentrating liquid is centrifuged at 6.5k rpm for 60 minutes at 18 °C using Universal centrifuge with cooling system Z383K made by Hermle Labortechnik company. The sediment is enveloped by synthetic fabric and pressed under pressure of up to 60 psi. At first, liquid flows out of the fabric, and when flow stops, pressure is reduced, and the concentrate is ready.

Alternatively, other methods of concentrating toner can be used.

According to the invention the toner particles are tentacular, in that they are formed with cores of optionally colored polymer having extensions (tentacles) formed of substantially the same materials as the core. When present in a relatively low concentration, the particles are free to move in the liquid and can be electro-photographically developed or concentrated. When an image is developed, the concentration of particles increases and the extensions intertwine or otherwise mechanically interact, to rigidize the image to an extent not present when other types of toner particles are used.

The term dispersion is used herein to denote a mixture, in which fine toner particles are scattered throughout a liquid. Preferably, dispersion is stable such that the particle size distribution is maintained over long period of time, for instance, more than a year.

According to the invention, it may be advantageous to have a combination of high concentration and easy re-dispersion.

The nominal solid concentration of a dispersion may vary with the measurement method. In the present description and claims, solid concentrations are measured as follows: a concentrate sample of, for instance, 4 grams, is placed on Buchner funnel and rinsed 5 times with hexane to discard any heavy oil that might present therein. The rinsed concentrate is moved to a Sartorius analyzer (MA45 Moisture analyzer by Sartorius AG) where it is exposed to heat, such that the liquid is evaporated until a constant weight is achieved. The dried sample is weight, and the solid concentration is determined to be the ratio between the weight of the dry sample and the sample before rinsing.

In preferred embodiments of the invention, re-dispersion is easily obtained. For instance, it may be obtained by mixing the concentrate with the carrier liquid in a high shear mixer for less than 5 minutes, preferably about 1 minute. An example of a high shear mixer is Diax 100 (Heildolph) type 8G that rotates at 10-25k rounds per minute and has an 8mm diameter head. The maximum power is 100 Watt and it is protected against overheating. In the examples below, a speed of 25k rpm was used. Alternatively, an ultrasonic device such as Vibracell Model VCF-1500 of Sonic and materials may be used to re-dispersed the concentrate into a workable liquid developer.

In exemplary embodiments, useful for printing with HP Indigo Presses, the dispersion obtained in the re-dispersion process has particles of average size smaller than 8 or 7 microns, and the percentage of particles larger than 20 microns is less than 20%, 10%, or 5%. However, other printing systems may require (or be tolerant to) other size distributions; and these are also provided by the present invention.

The particle size distribution is measured on Mastersizer 2000, produced by Malvern instruments. It is a laser diffraction system.

It is noted that the ability to concentrate to high solid concentration and to re-disperse from such high concentrations of tentacular toner particles is very surprising. Due to the fiber like extensions on the particles, (tentacles morphology), the ability to achieve high packing without irreversible agglomeration was expected to be limited. In a conventional concentrating process, wherein concentration is done in Isopar L as without any concentrating liquid, by centrifugation, the maximal concentration that may be achieved is, effectively, about 23% solids. An attempt to further concentrate by application of additional pressure ends up in irreversible agglomeration of part of the particles and the average size and the percent tail increase considerably such that the ink is not appropriate anymore for printing. The incorporation of concentrating liquids, such as oils having high viscosity and low vapor pressure as taught by the present invention, renders the capability of achieving very high concentrated inks which are easily re-dispersed, without having an adverse effect on particle size distribution. Some of these oils should be kept at low concentration in the final toner developer due to adverse effect they have on the durability of the ink on the substrate. The surprising effect is the relative ease with which the concentration can be formed and the higher concentrations achieved.

Non-limiting examples for carrier liquids which form workable liquid developers are Isopar-L (Exxon), Isopar H (Exxon), Electron(Hydrocarbon terpen blends)(Ecolink), Positron (hydrocarbon-terpen)(Ecolink), New 2 (Isoparaffinic hydrocarbons)(Ecolink).

As for the ink or liquid developer itself, it preferably has less than 10% (w/w) solids, and a typical value is 2% solids.

Specific embodiments of the invention will now be described in detail. These examples are intended to be illustrative, and the invention is not limited to the materials conditions, or process parameters set forth in these embodiments. Comparative examples are also provided.

### Example 1: Use of Marcol 82 as concentrating liquid

### A. Preparing toner particle precursors

Toner particle precursors are prepared by loading 750 grams of Nucrel 699 resin (an ethylene methacrylic acid copolymer by Dupont, substantially free of carboxyl terminated polyester resin) and 2250 grams of Isopar-L (an isoparaffinic hydrocarbon with b.p. 196°-206°C by Exxon), in a Ross double planetary mixer DPM 1.5 gallons (Charles Ross & Son company), preheated by a heating bath, set to 150°C.

The ingredients are mixed for about 1.5 hours at speed control setting 3. The speed is increased to a speed setting of 6 for 30 minutes. After complete solubilization of the resin the heating is stopped and the mixer is cooled with a fan while mixing is continued. The result is a white pasty material comprising toner particle precursors containing a paste of solubilized resin of about 33% solids.

### B. Grinding with a concentrating liquid

1414.11 grams of the toner particle precursor are loaded into a 1S attritor (Union Process) with 3/16" balls chrome steel grinding media, together with 80 grams of Heliogen blue pigment 7080 (BASF) pigment, 4.14 grams of aluminum tristearate (Riedel der Haan) as charge adjuvant, and 806.61 grams of Marcol 82 (mineral oil, also called liquid paraffin, by ESSO). The loaded materials are ground together at 30°C for 12 hours at 250 rpm. The average particle size obtained this way is 6.2 micron and the tail (that is portion of particles larger than 20 micron) is 2.4%.

### C. Concentrating of the ground toner

The ground toner obtained in B is centrifuged at 6.5k rpm for 60 minutes at 18°C, and the supernatant is drained. The sediment is transferred into a mold in between two synthetic wipers (TX 1009 AlphaWipe®, produced by ITWTexwipe). A pressure of up to 60 psi is applied until the flow of the liquid ceases, to achieve an ink concentrate of 65% solids.

### D. Mixing with a conventional carrier liquid

The resultant concentrate is diluted with Isopar-L in order to reduce the toner concentration to 2% solids. It is subjected to high shear mixing for 1 min to produce the liquid developer. The average particle size is 6.9 micron and the tail is 5%.

### E. Charging the obtained developer

The developer is optionally charged utilizing a charge director, containing 30 parts by weight lecithin, 30 parts by weight Basic Barium Petronate (BBP) and 6 parts by weight isopropylamine dodecylbenzesulfonate (ICI G3300B) as a stabilizer. The charge director, dissolved in Isopar-L is added in an amount of about 30-40 mg of solids of the charge director per gram of toner solids.

### F. Testing in the printing press

The resulted liquid developer obtained in stage E was placed in HP Indigo WS 2000 press, using the regular set up. A very good print quality was achieved.

### Control Example 1

Similar procedure was used to produce a control for Example 1. The only change was in stage B, in which instead of addition of 806 gram Marcol 82, the same amount of Isopar L was added. The result of the concentration under pressure was 42% solids. Following the dispersion by high shear mixer, the average particle size was 9 micron and the tail was 24%, compared to values of 6.2 micron average size and 2.4% tail. A liquid developer with such a long tail is unacceptable for presses of the kind used at stage F of example 1.

### Example 2 - Adding a concentrating liquid after grinding

Stage A is identical to stage A in example 1; in stage B Isopar L is used as the vehicle instead of Marcol 82.

### Stage C- replacement of the Isopar L with Marcol 82

The ground toner obtained in stage B is diluted to 10% nvs with Isopar L and subjected to centrifugation at 6.5k rpm. The supernatant (Isopar L), is replaced with Marcol 82 (40% of the total weight of the ink dispersion) and the sediment is redispersed in the Marcol 82 by high shear mixing for a duration of 0.5 minutes. The developer is left to rest for 1 hour. It had particles of average size 5.8 microns, and tail of 0.98%.

### Stage D- Concentrating the redispersed toner

The liquid developer obtained in stage C is centrifuged at 6.5k rpm for 10 minutes at 18°C, and the supernatant is drained. The sediment is transferred into a mold in between two synthetic wipers (TX 1009 AlphaWipe®, produced by ITWTexwipe). A pressure of up to 60 psi is applied to achieve an ink concentrate at 65% solids.

### Stage E - Mixing with a carrier liquid

The concentrate obtained in stage D is discharged from the mold and diluted with Isopar-L in order to reduce the toner concentration to 2% solids. It is subjected to high shear mixing for 1 min to build up the liquid developer. The average particle size obtained is 5.9 micron and the tail is 0.92%.

### Example 3 - Isopar M as a concentrating liquid, added during grinding

### A. Preparing toner particle precursors

The preparation process is identical to the description in Example 1, except for that Isopar L is added at the end of the preparation stage to dilute the precursor to 22.4%.

### B. Grinding with a concentrating liquid

130 grams of the toner particle precursor obtained in A are loaded into an S0 attritor (Union Process) with 3/16" balls chrome steel grinding media, together with pigments (6.4 grams of Heliogen blue D-7080 and 0.6 g Heliogen green (BASF); 0.36 grams of aluminum tristearate (Riedel de Haen) as charge adjuvant, and 63.5 grams of Isopar M (Exxon). The loaded materials are ground together at 30°C for 6 hours at 250 rpm. Average particle size obtained is 8.9 micron and the tail is 8%.

### C. Concentrating of the ground toner

The result of B is centrifuged at 6.5k rpm for 1 hour at 18° C, and the supernatant is drained. The sediment is transferred into a mold in between two synthetic wipers (TX 1009 AlphaWipe®, produced by ITWTexwipe). A pressure of up to 60 psi is applied to achieve an ink concentrate of 47.9% solids.

### D. Mixing with a a conventional carrier liquid

The concentrate obtained in D is discharged from the mold and diluted with Isopar-L in order to reduce the toner concentration to 2% solids. It is subjected to high shear mixing for 1 min to produce the liquid developer. The average particle size was 8.4 micron and the tail was 5.2%.

### Example 4- Exxol D110 as the grinding liquid

### A. Preparing toner particle precursors

The preparation process is identical to the description in Example 1, and Isopar L further dilutes the material to 22.4%.

### B. Grinding with a first liquid

130 grams of the toner particle precursor are loaded into a S0 attritor (Union Process) with 3/16" balls chrome steel grinding media, together with pigments (6.4 grams of Heliogen blue D-7080 and 0.6 g Heliogen green (BASF) ;0.36 grams of aluminum tristearate (Riedel de Haen) as charge adjuvant, and 63.5 grams of Exxsol D110. The loaded materials are ground together at 30°C for 6 hours at 250 rpm. Average particle size is 5.8 micron and the tail - 1%.

### C. Concentrating of the ground toner

The liquid developer is centrifuged at 6.5k rpm for 1 hour at 18° C, and the supernatant is drained. The sediment is transferred into a mold in between two synthetic wipers (TX 1009 AlphaWipe®, produced by ITWTexwipe). A pressure of up to 60 psi is applied to achieve an ink concentrate at 52.5% solids.

### D. Mixing with a second liquid

The result concentrate is discharged from the mold and diluted with Isopar-L in order to reduce the toner concentration to 2% solids. It is subjected to high shear mixing for 1 min to build up the liquid developer. The average particle size was 6.6 micron and the tail was 5.2%.

### Example 5- SoyGold 2000 as grinding liquid

### A. Preparing toner particle precursors

The preparation process is identical to the description in Example 4.

### B. Grinding with a concentrating liquid

130 grams of the toner particle precursor are loaded into a S0 attritor (Union Process) with 3/16" balls chrome steel grinding media, together with pigments (6.4 g Heliogen blue D-7080 and 0.6 g Heliogen green (BASF)) ;0.36 grams of aluminum tristearate (Riedel de Haen) as charge adjuvant, and 63.5 grams of SoyGold 2000 (A methyl ester solvent derived from soybean, blended with a surfactant for easy water rinsing, by Ag Processing Inc., Omaha, Nebraska) . The loaded materials are ground together at 30° C for 6 hours at 250 rpm. Average particle size was 5.3 micron and the tail of 4.2%.

### C. Concentrating of the ground toner

The ground toner is centrifuged at 6.5k rpm for 1 hour at 18° C, and the supernatant is drained. The sediment is transferred into a mold in between two synthetic wipers (TX 1009 AlphaWipe®, produced by ITWTexwipe). A pressure of up to 60 psi is applied to achieve an ink concentrate of 37.3% solids.

### D. Mixing with a second liquid

The resulted concentrate is discharged from the mold and diluted with Isopar-L in order to reduce the toner concentration to 2% solids. It is subjected to high shear mixing for 1 min to build up the liquid developer. The average particle size was 4.5 micron and the tail was 0.5%.

### Comparative Example: Silicone oil as a concentrating liquid added at the grinding stage

### A. Preparing toner particle precursors

The preparation process is identical to the description in Example 4.

### B. Grinding with a concentrating liquid

130 grams of the toner particle precursor are loaded into an S0 attritor (Union Process) with 3/16" balls chrome steel grinding media, together with 6.4 grams of pigments (heliogen Heliogen blue D-7080 and 0.6 g Heliogen green (BASF) ;0.36 grams of aluminum tristearate (Riedel de Haen) as charge adjuvant, and 63.5 grams of Silicone oil. The loaded materials are ground together at 30° C for 6 hours at 250 rpm. Average particle size was 13.7 micron and the tail is 32%.

### C. Concentrating of the ground toner

The ground toner obtained in C B is centrifuged at 6.5k rpm for 1 hour, and the supernatant is drained. The sediment is transferred into a mold in between two synthetic wipers (TX 1009 AlphaWipe®, produced by ITWTexwipe). A pressure of up to 60 psi is applied to achieve an ink concentrate of 54.9% solids.

While the silicone oil appears to be too viscous to provide proper grinding of the toner particles, the redispersion is seen to be good.

### D. Mixing with a second liquid

The result concentrate is discharged from the mold and diluted with Isopar-L in order to reduce the toner concentration to 2% solids. It is subjected to high shear mixing for 1 min to build up the liquid developer. The average particle size was 12.7 micron and the tail was 29%.

Available physical characteristics of the various grinding liquids listed in the examples are provided in table 1 below.

**Table 1: physical characteristics of the exemplary liquids**

| | Isopar- | Marcol | Isopar- | Silicone | EXXSOL | SoyGold |
|---|---|---|---|---|---|---|
| | L | 82 | M Oil | | D110 | 2000 |
| Vapor Pressure | 29.3 | <13.3 | <13.3 | | <1.33 | 117 |
| Pa ([mmHg]) | (0.22) | (<0.1) | (<0.1) | | (< 0.01) | (0.88) |
| Specific Gravity | 0.779 | 0.843 | 0.786 | 0.98 | 0.826 | 0.882 |
| Viscosity [mPa·s] | 1.26 | 13.9 | 2.37 | 160-170 | 3.5 | 4.72 |
| Evaporation.Rate [n-BuAc.=100] | 4.5 | | <1 | | <1 | <0.005 |
| Surface tension [dyne cm^{a1}] | 25.1 | | 26.4 | 2.15 | 27.9 | |

Among the liquids enlisted in the table, Marcol 82, Isopar M, and SoyGold 2000 were found suitable as concentrating liquids. They all have viscosity higher than 3 mPa·s (3 cSt). Silicon oil, which has much higher viscosity, was found unsuitable, however, it may prove suitable if used to replace some of the ISOPAR after grinding. Low vapor pressure, may be useful to allow the concentrate long shelf-life, since liquids with low vapor pressure remain at constant concentration in the concentrate for longer periods than do liquids with higher vapor pressure. Without being bound to theory, it is suggested that good concentrating liquids enable lubrication of the tentacular toner particles and therefore contribute to closer packing of the ink particles upon application of pressure, and this way allow concentrating to high concentrations in a manner that allows easy redispersion. Hence, the lubricity of the liquid (that is, the liquid's tendency to lubricate the toner particles) seems to be a key factor in rendering a liquid suitable as a concentrating liquid.

The present invention has been described using non-limiting detailed descriptions of embodiments thereof that are provided by way of example and are not intended to limit the scope of the invention. It should be understood that features and/or steps described with respect to one embodiment may be used with other embodiments and that not all embodiments of the invention have all of the features and/or steps described with respect to one of the embodiments. Variations of embodiments described will occur to persons of the art. Furthermore, the terms "comprise," "include," "have" and their conjugates, shall mean, when used in the disclosure and/or claims, "including but not necessarily limited to."

It is noted that some of the above described embodiments may describe the best mode contemplated by the inventors and therefore may include structure, acts or details of structures and acts that may not be essential to the invention and which are described as examples. Therefore, the scope of the invention is limited only by the elements and limitations as used in the claims.

## Claims

1. An electro-graphic printing ink concentrate comprising tentacular ink particles at solid concentration of at least 30% nvs, in a liquid carrier, wherein the ink concentrate further comprises a concentrating liquid having a viscosity of from 3 to 50 mPa·s (3 to 50 cSt) at 25°C, and wherein the ink particles are tentacular in that they are formed with cores of polymer having extensions formed of substantially the same materials as the core.

2. The printing ink concentrate of claim 1, wherein said liquid carrier is selected from hydro carbonic oils, silicone oils, mineral oils and mixtures thereof.

3. The printing ink concentrate of claim 1 or claim 2, wherein the vapor pressure of the concentrating liquid at room temperature is below 20 Pa (0.15 mmHg).

4. The printing ink concentrate of any one of claims 1 to 3, wherein the vapor pressure of the concentrating liquid at room temperature is below 13.3 Pa (0.10 mmHg).

5. The printing ink concentrate of any one of claims 1-4, wherein the concentrating liquid comprises a mineral oil.

6. The printing ink concentrate of any one of claims 1-4, wherein the concentrating liquid comprises hydrocarbon fluid.

7. The printing ink concentrate of any one of claims 1-4, wherein the concentrating liquid comprises a methyl-ester solvent.

8. The printing ink concentrate of any one of claims 1-7, wherein said solid concentration is at least 40% nvs.

9. The printing ink concentrate of any one of claims 1-7, wherein said solid concentration is at least 50% nvs.

10. A method of producing a re-dispersible tentacular ink concentrate, the method comprising:
a) grinding ink particles precursors in a carrier liquid to obtain a dispersion of ink particles in the carrier liquid;
b) replacing at least a portion of the carrier liquid by a suitable concentrating liquid having a viscosity of from 3 to 50 mPa·s (3 to 50 cSt) at 25°C to obtain a replaced dispersion, and
c) concentrating said replaced dispersion to at least 30% solids,
wherein the ink particles are tentacular in that they are formed with cores of polymer having extensions formed of substantially the same materials as the core.

11. A method according to claim 10, wherein concentrating liquid is present in at least 10% by weight of the total liquid before concentration.

12. A method according to any one of claims 10 to 11, wherein the vapor pressure of the concentrating liquid is below 20 Pa (0.15 mmHg).

13. A method of making electro-photographic printing ink, wherein the method comprises diluting the printing ink concentrate of any one of claims 1-7 or produced according to the method of any one of claims 10-12 with a carrier liquid to produce a liquid ink having a toner particle concentration of between 1 and 5 % by weight.

14. A method according to any of claims 10-13 wherein the percentage of concentrating liquid is at least 25%.

## Patentansprüche

1. Tintenkonzentrat für den elektrografischen Druck, umfassend tentakelförmige Tintenpartikel in einer Feststoffkonzentration von zumindest 30 % NVS in einem flüssigen Träger, wobei das Tintenkonzentrat ferner eine Konzentrationsflüssigkeit mit einer Viskosität von 3 bis 50 mPa·s (3 bis 50 cSt) bei 25 °C umfasst, und wobei die Tintenpartikel dahingehend tentakelförmig sind, dass sie mit Kernen aus Polymer mit Verlängerungen gebildet sind, die aus im Wesentlichen den gleichen Materialien wie der Kern gebildet wurden.

2. Drucktintenkonzentrat nach Anspruch 1, wobei der flüssige Träger aus Kohlenwasserstoffölen, Silikonölen, Mineralölen und Mischungen davon ausgewählt ist.

3. Drucktintenkonzentrat nach Anspruch 1 oder 2, wobei der Dampfdruck der Konzentrationsflüssigkeit bei Raumtemperatur unter 20 Pa (0,15 mmHg) liegt.

4. Drucktintenkonzentrat nach einem der Ansprüche 1 bis 3, wobei der Dampfdruck der Konzentrationsflüssigkeit bei Raumtemperatur 13,3 Pa (0,10 mmHg) beträgt.

5. Drucktintenkonzentrat nach einem der Ansprüche 1 bis 4, wobei die Konzentrationsflüssigkeit ein Mineralöl umfasst.

6. Drucktintenkonzentrat nach einem der Ansprüche 1 bis 4, wobei die Konzentrationsflüssigkeit ein Kohlenwasserstofffluid umfasst.

7. Drucktintenkonzentrat nach einem der Ansprüche 1 bis 4, wobei die Konzentrationsflüssigkeit ein Methylesterlösungsmittel umfasst.

8. Drucktintenkonzentrat nach einem der Ansprüche 1 bis 7, wobei die Feststoffkonzentration zumindest 40 % NVS beträgt.

9. Drucktintenkonzentrat nach einem der Ansprüche 1 bis 7, wobei die Feststoffkonzentration zumindest 50 % NVS beträgt.

10. Verfahren zum Herstellen eines redispergierbaren tentakelförmigen Tintenkonzentrats, wobei das Verfahren umfasst:
a) Zermahlen von Tintenpartikelpräkursoren in einer Trägerflüssigkeit, um eine Dispersion von Tintenpartikeln in der Trägerflüssigkeit zu erhalten;
b) Ersetzen zumindest eines Teils der Trägerflüssigkeit durch eine geeignete Konzentrationsflüssigkeit mit einer Viskosität von 3 bis 50 mPa·s (3 bis 50 cSt) bei 25 °C, um eine ersetzte Dispersion zu erhalten, und
c) Konzentrieren der ersetzten Dispersion auf zumindest 30% Feststoffe,
wobei die Tintenpartikel dahingehend tentakelförmig sind, dass sie mit Kernen aus Polymer mit Verlängerungen gebildet sind, die aus im Wesentlichen den gleichen Materialien wie der Kern gebildet wurden.

11. Verfahren nach Anspruch 10, wobei die Konzentrationsflüssigkeit zu zumindest 10 Gew.-% der Gesamtflüssigkeit vor Konzentration vorhanden ist.

12. Verfahren nach einem der Ansprüche 10 bis 11, wobei der Dampfdruck der Konzentrationsflüssigkeit unter 20 Pa (0,15 mmHg) liegt.

13. Verfahren zum Herstellen einer Tinte für den elektrofotografischen Druck, wobei das Verfahren das Verdünnen des Drucktintenkonzentrats nach einem der Ansprüche 1 bis 7 oder das mit dem Verfahren nach einem der Ansprüche 10 bis 12 hergestellt wurde, mit einer Trägerflüssigkeit umfasst, um eine Flüssigtinte mit einer Tonerpartikelkonzentration zwischen 1 und 5 Gew.-% zu erhalten.

14. Verfahren nach einem der Ansprüche 10 bis 13, wobei der prozentuale Anteil an Konzentrationsflüssigkeit zumindest 25% beträgt.

## Revendications

1. Concentré d'encre d'impression électrographique comprenant des particules d'encre tentaculaires à une concentration en matières solides d'au moins 30 % nvs, dans un véhicule liquide, le concentré d'encre comprenant en outre un liquide de concentration ayant une viscosité de 3 à 50 mPa·s (3 à 50 cSt) à 25°C, et les particules d'encre étant tentaculaires par le fait qu'elles comportent des coeurs de polymère ayant des extensions formées de sensiblement les mêmes matières que le coeur.

2. Concentré d'encre d'impression selon la revendication 1, dans lequel ledit véhicule liquide est choisi parmi les huiles hydrocarboniques, les huiles de silicone, les huiles minérales et leurs mélanges.

3. Concentré d'encre d'impression selon la revendication 1 ou la revendication 2, dans lequel la pression de vapeur du liquide de concentration à la température ambiante est au-dessous de 20 Pa (0,15 mmHg).

4. Concentré d'encre d'impression selon l'une quelconque des revendications 1 à 3, dans lequel la pression de vapeur du liquide de concentration à la température ambiante est au-dessous de 13,3 Pa (0,10 mmHg).

5. Concentré d'encre d'impression selon l'une quelconque des revendications 1 à 4, dans lequel le liquide de concentration comprend une huile minérale.

6. Concentré d'encre d'impression selon l'une quelconque des revendications 1 à 4, dans lequel le liquide de concentration comprend un fluide hydrocarboné.

7. Concentré d'encre d'impression selon l'une quelconque des revendications 1 à 4, dans lequel le liquide de concentration comprend un solvant ester méthylique.

8. Concentré d'encre d'impression selon l'une quelconque des revendications 1 à 7, dans lequel ladite concentration en matières solides est d'au moins 40 % nvs.

9. Concentré d'encre d'impression selon l'une quelconque des revendications 1 à 7, dans lequel ladite concentration en matières solides est d'au moins 50 % nvs.

10. Procédé de fabrication d'un concentré d'encre tentaculaire redispersible, le procédé comprenant les opérations consistant à :
a) broyer des précurseurs de particules d'encre dans un véhicule liquide pour obtenir une dispersion de particules d'encre dans le véhicule liquide;
b) remplacer au moins une partie du liquide support par un liquide de concentration approprié ayant une viscosité de 3 à 50 mPa.s (3 à 50 cSt) à 25°C pour obtenir une dispersion remplacée ; et
c) concentrer ladite dispersion remplacée jusqu'à au moins 30 % de matières solides,
les particules d'encre étant tentaculaires par le fait qu'elles comportent des coeurs de polymère ayant des extensions formées de sensiblement les mêmes matières que le coeur.

11. Procédé selon la revendication 10, dans lequel le liquide de concentration est présent dans au moins 10 % en poids du liquide total avant concentration.

12. Procédé selon l'une quelconque des revendications 10 à 11, dans lequel la pression de vapeur du liquide de concentration est au-dessous de 20 Pa (0,15 mmHg).

13. Procédé de fabrication d'une encre d'impression électrophotographique, dans lequel le procédé comprend la dilution du concentré d'encre d'impression de l'une quelconque des revendication 1 à 7 ou obtenu conformément au procédé de l'une quelconque des revendications 10 à 12 par un véhicule liquide pour produire une encre liquide ayant une concentration de particules de toner d'entre 1 à 5 % en poids.

14. Procédé selon l'une quelconque des revendications 10 à 13, dans lequel le pourcentage du liquide de concentration est d'au moins 25 %.
